# EUROPEAN PATENT APPLICATION

(11) **EP 0 754 881 A2**
(43) Date of publication of application: **22.01.1997**
(21) Application number: 96305029.9
(22) Date of filing: 08.07.1996
(51) Int. Cl.: F16H 31/00

(54) **Drive mechanism**

(30) Priority: 19.07.1995 GB 9514826
(71) Applicant: ROLLS-ROYCE POWER ENGINEERING plc, Newcastle-upon-Tyne NE3 3SB (GB)
(72) Inventor: Yates, David Edwin, Church Lench, Evesham WR11 4UE (GB)

(57) **Abstract**

A reversible drive mechanism comprises a shaft (18) provided with two axially spaced apart toothed rings (19,20). The teeth (21,22) extend in a generally radial direction and are inclined clockwise and anti-clockwise respectively. Hydraulic rams (23) are selectively actuated to engage the teeth (21,22) to rotate the rings (19,20) and the shaft (18) in either the clockwise or anti-clockwise direction. Continuous rotation of the rings (19,20) is achieved by operating the rams (23) in a phased relationship. The mechanism can be locked to prevent rotation of the shaft (18) by simultaneously actuating all of the rams (23) into engagement with the teeth (21,22).

## Description

This invention relates to a drive mechanism and in particular to a drive mechanism which is both reversible and lockable.

It is well known to provide a lockable drive mechanism which provides rotary movement in both clockwise and anti-clockwise directions. Such drive mechanisms are used in a wide range of applications, for instance, on the turrets of tanks or cranes. However, the drive mechanism of the present invention, although applicable to such devices, is particularly useful when incorporated in wind turbines for use in the generation of electricity.

Wind turbines conventionally comprise a vertical column on the top of which is mounted a nacelle which in turn supports the turbine. The turbine is rotatably mounted on a horizontal shaft which extends from the nacelle. In order to ensure that the turbine is always in the optimum position relative to the local wind direction, the nacelle, and so in turn the turbine, are mounted from the column so as to be rotatable about a vertical axis. Thus, depending on the wind direction, the nacelle is rotated in a clockwise or anti-clockwise direction until the turbine is normal to and facing that wind direction.

The nacelle is usually provided with a large geared ring which cooperates with a driven pinion to facilitate its rotation. While such a mechanism is capable of providing satisfactory nacelle rotation under the majority of conditions, it can be troublesome under extreme conditions such as gales and hurricanes when it is necessary to place the turbine in a safe position to avoid damage. A large amount of effort is necessary to provide this nacelle rotation and then there is the additional problem of locking the nacelle in position when the safe position has been reached. In the past this has been achieved by providing the toothed ring with a friction brake such as one of the caliper type. However such brakes are sometimes not as effective as would normally be desirable.

It is an object of the present invention to provide an improved reversible and lockable drive mechanism which is particularly useful for use with such wind turbines.

According to the present invention, a reversible drive mechanism comprises first and second driven members, each of said driven members having inclined teeth, characterised in that the inclination of the teeth on said first member being opposite to the inclination of the teeth on said second member, each of said first and second driven members being associated with two or more rams, the rams associated with said first driven member being so disposed as to drive said first driven member in a first direction and the rams associated with said second driven member being so dispcsed as to drive said second member in the opposite direction, each of said rams being moveable between a first position in which it drivingly engages its associated driven member and a second position in which it does not drivingly engage its associated driven member, means being provided to move said rams between said first and second positions and to selectively move all of said rams into said first position to provide locking of said first and second driven members.

The present invention will now be described, by way of example, with reference to the accompanying drawings in which:

Figure 1 is a side view of a wind turbine that incorporates a drive mechanism in accordance with the present invention.

Figure 2 is a side view of the drive mechanism of the wind turbine shown in Figure 1, some of the components of the turbine having been omitted in the interests of clarity.

Figure 3 is a view on arrow A of Figure 2.

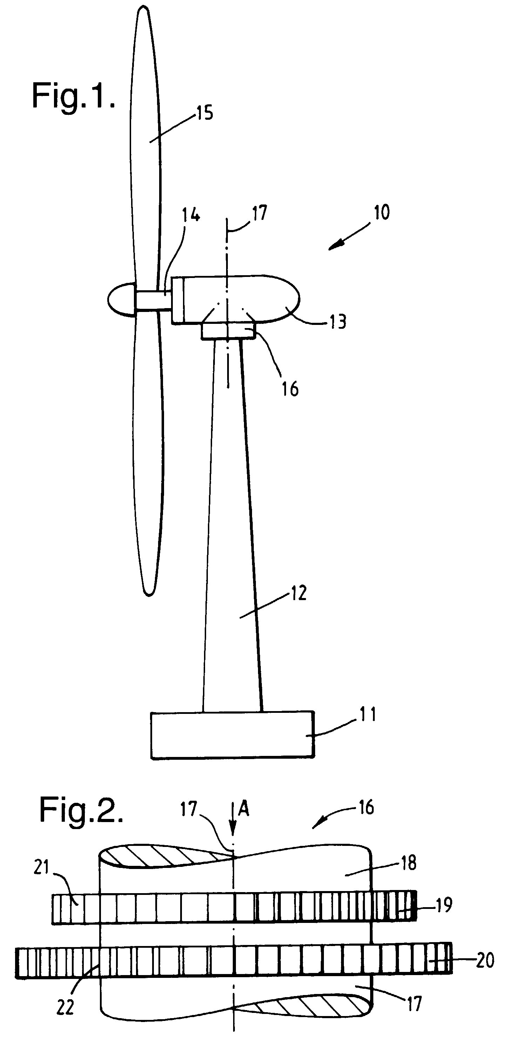

With reference to Figure 1, a wind turbine generally indicated at 10 is of generally conventional configuration comprising a base 11 which carries a vertical column 12. At the top of the column 12 there is positioned a nacelle 13 from which extends a horizontal shaft 14 which in turn carries a turbine 15.

In order for the turbine 15 to operate as efficiently as possible, it is necessary for it to be positioned facing and generally normal to the wind flowing over it. This is achieved by the rotation of the nacelle 13 about a vertical axis 17 relative to the column 12 until the appropriate position is achieved. A drive mechanism generally indicated at 16 is used to achieve this end.

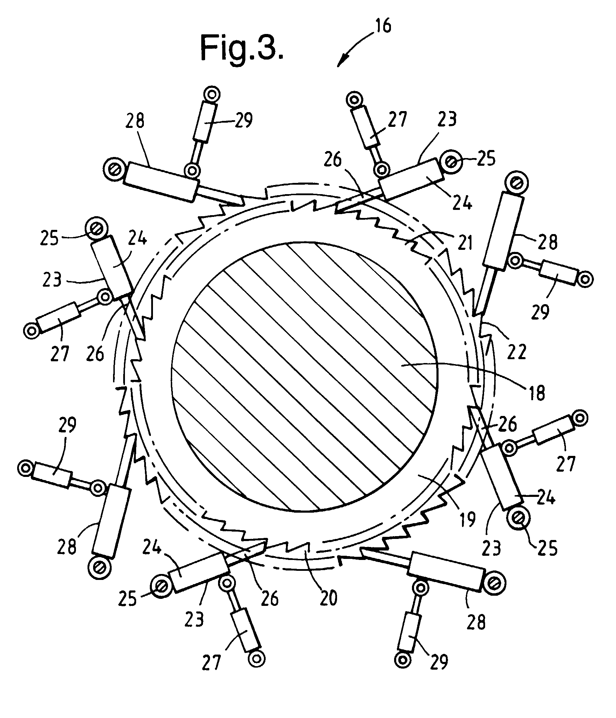

The construction of the drive mechanism 16 can be seen in more detail if reference is now made to Figures 2 and 3. The nacelle 13 is fixedly attached to a vertical shaft 18 which is mounted for rotation at the top of the column 12. The shaft 18 is provided with two axially spaced apart toothed rings 19 and 20 which are coaxial with the vertical axis 17 and with each other. The upper ring 19 is of a smaller diameter than the lower ring 20, although it will be appreciated that this is not in fact essential and that they may be of the same diameter if so desired.

The periphery of each of the rings 19 and 20 is in the form of a rack having generally radially extending teeth. The teeth 21 on the upper ring 19 are, as can be seen in Figure 3, inclined in a clockwise direction. This is in contrast to the teeth 22 on the lowermost ring 20 which are inclined in an anti-clockwise direction.

Each of the rings 19 and 20 is surrounded by an array of four generally equally spaced apart double-acting hydraulic rams which can be seen in Figure 3. Each of the rams 23 which surround the uppermost ring comprises a fixed portion 24 which is pivotally attached to the column 12 at a pivot point 25 and a translatable portion 26 which engages one of the teeth 21. The rams 23 are inclined so as to be generally tangential to the periphery of the ring 19 so that their translatable portions 26 each engage an inclined tooth 21. The rams 23 are so inclined that they each drivingly engage one of the teeth 21 on periphery of the ring 19. It will be seen therefore that when the rams 23 are actuated, each ram 23 reacts upon a corresponding one of the teeth 21 to bring about limited rotation of the ring 19 in an anti-clockwise direction. Continuous rotation of the ring 19 is achieved by operating the rams 23 in a phased relationship so that as one ram 23 is reaching the maximum extent of its stroke, another is commencing its stroke and the third is part-way through its stroke. The fourth ram 23 is in the process of being withdrawn at this point in readiness to commence a power stroke.

When one of the rams 23 has completed the maximum extent of its stroke and is about to be withdrawn in readiness for its next stroke, the ram 23 is pivoted about its pivot point 25 away from the ring 19. When withdrawal has been achieved, the ram 23 is then pivoted back towards the ring so as to re-engage with the teeth 21. This pivotal movement is achieved by the use of a secondary double-acting ram 27 which is positioned normal to the primary ram 23; each of the primary rams 23 being provided with such a secondary ram 27.

It will be seen therefore that the ring 19 and the rams 23 act in the manner of a ratchet mechanism with the toothed ring 19 functioning as a ratchet wheel and the rams 23 as pawls.

Although in the case of the above embodiment of the present invention, secondary rams 27 are used to ensure that the primary rams 23 engage the ring teeth 21, it will be appreciated that other suitable reversible biasing means, such as one incorporating a spring mechanism, could employed if so desired.

The lower toothed ring 20 is actuated by four rams 28 which are similar to the rams which actuate the uppermost ring 19 and function in the same manner. The only difference between them is that the lower rams 28 are so inclined as to rotate the lower ring 20 in the opposite direction to that of the upper ring 19. Secondary rams 29 similar to the secondary rams 27 are associated with the primary rams 28 to bias the primary rams 28 towards the teeth 22 on the ring 20.

The two sets of rams 23 and 28 thereby serve to provide rotation of rings 19 and 20, and hence the shaft 18, in both clockwise and anti-clockwise directions. It is therefore possible through suitable actuation of the rams 23 and 28 to rotate the shaft 18, and hence the nacelle 13, so that the turbine 15 is normal to and facing the wind direction.

In the event of a gale or hurricane, it becomes necessary to rotate the nacelle 13 so that the turbine 15 is not facing the wind direction. The mechanism in accordance with the present invention is capable of achieving this. It is additionally capable of locking the nacelle 13 in this position until normal wind turbine operation can re-commence. Such locking is brought about by ensuring that all of the secondary rams 27 and 29 are actuated simultaneously. This in turn ensures that all of the primary rams 23 and 28 are simultaneously in engagement with their associated teeth 21 and 22. Simultaneous actuation of the primary rams 23 and 27 thereby ensures that they prevent rotation of the shaft 18.

Although the present invention has been described with reference to the drive mechanism of a wind turbine, it will be appreciated that it is not specifically limited to use with such devices. Moreover, it will also be appreciated that the teeth 21 and 22 need not be necessarily be positioned on the periphery of a ring. They could, for instance, be situated on a linear member.

## Claims

1. A reversible drive mechanism (16) comprising first (19) and second (20) driven members, each of said driven members (19,20) having inclined teeth (21,22), characterised in that the inclination on the teeth (21) of said first member (19) being opposite to the inclination of the teeth (22) on said second member (20), each of said first (19) and second (20) driven members being associated with two or more rams (23,28), the rams (23) associated with said first driven member (19) being so disposed as to drive said first driven member (19) in a first direction and the rams (28) associated with said second driven member (20) being so disposed as to drive said second member (20) in the opposite direction, each of said rams (23,28) being moveable between a first position in which it drivingly engages its associated driven member (29,20) and a second position in which it does not drivingly engage its associated driven member (19,20), means being provided to move said rams (23,28) between said first and second positions and to selectively move all of said rams (23,28) into said first position to provide locking of said first (19) and second (20) driven members.

2. A reversible drive mechanism as claimed in claim 1 characterised in that the rams (23,28) are pivotally mounted adjacent the first and second driven members (19,20), biassing means being provided to ensure that the rams (23,28) engage with the respective teeth (21,22).

3. A reversible drive mechanism as claimed in claim 2 characterised in that the biassing means are a further set of rams (27,29).

4. A reversible drive mechanism as claimed in claims 1-3 characerised in that the first and second driven members (19, 20) are contra-rotating gear rings, each gear ring having inclined gear teeth (21,22) at the periphery thereof.

5. A reversible drive mechanism as claimed in claim 4 characterised in that the rams (23,28) associated with each gear ring (19,20) are angled generally tangentially to the periphery of the gear ring.

6. A reversible drive mechanism as claimed in any preceding claim characterised in that the rams (23,28) are hydraulically operated.

7. A reversible drive mechanism as claimed in claims 4-6 characterised in that continuous rotation of each gear ring (19,20) is achieved by operating the rams (23,28) associated with each gear ring (19,20) in phased relationship.

8. A reversible drive mechanism as claimed in any preceding claim for the rotation of a wind turbine.
